# EUROPEAN PATENT APPLICATION

(11) **EP 3 800 599 A1**
(43) Date of publication of application: **07.04.2021**
(21) Application number: 19201133.6
(22) Date of filing: 02.10.2019
(51) Int. Cl.: G06Q 10/10, G06Q 10/06

(54) **COMMUNICATION-CENTERED ENHANCEMENTS TO CASE MANAGEMENT**

(71) Applicant: Unify Patente GmbH & Co. KG, 80807 München (DE)
(72) Inventor: Totzke, Jürgen, 85586 Poing (DE)
(74) Representative: Pösentrup, Judith

(57) **Abstract**

The present invention relates to an Adaptive Case Management (ACM) system and method for modeling a plurality of cases corresponding to at least an agile business process, whereby said system comprises a digital workplace platform, a design platform comprising at least one of an Adaptive Case Management modeler, a business process management modeler, a decision management modeler. The system further comprises a runtime platform which further comprises at least one of a business event handler, an Adaptive Case Management runtime system which is connected to an at least one business software application suite via business software snippet gateway, a business process management runtime system which is connected to at least one business software application suite, a communication and collaboration system which is connected to an at least one communication and/or collaboration software and a decision management runtime system. Further, said system is configured to model synchronous real-time communication and collaboration acts and genres at design time of each of the plurality of cases and wherein execution and handling of retro-activities of each of the cases is under control of the adaptive case management runtime system after a deployment.

## Description

The present invention deals with a system and a method for communication-centered enhancements to case management. In particular, it deals with systems and methods that allow communication acts and genres to be modeled at design time level as part of a case model and corresponding communication and collaboration sessions related to communication genres and acts can be invoked by the Adaptive Case Management runtime system by providing a holistic view of increasing information and knowledge of the case across those platforms.

Adaptive Case Management (ACM), also known as dynamic or advanced case management refers to the coordination of a business event or service request in finance, health, legal, citizen or human resources-related matters, on behalf of a subject such as a customer, a citizen, or an employee.

The tasks required by a case usually involve creating a case folder or container for all required artifacts. Another important step in the processing of a case involves following business procedures, both determined and *ad hoc*, ensuring the delivery of the service. Due to the dynamic and unique nature of each case, the requested services usually require collaboration with other specialized workers both inside and outside of the servicing organization. When combined, case management is highly collaborative, dynamic, and contextual in nature, with events driving a long-lived case-based business process. The aggregation of many cases with a semblance of consistency, insight, and optimization becomes a challenging effort for both, the case worker and the organization.

In May 2014 the Object Management Group (OMG) ratified a standard for Case Management that is similar to existing standards for Business Process Management. The Case Management Model and Notation (CMMN) standard describes a graphical representation for expressing a Case, as well as an interchange format for exchanging Case models among different tools.

Adaptive Case Management (ACM) systems and methods are known from the state of the art.

Document US 2013/0024835 A1 discloses a dynamic case management (DCM) system and method intended for operation in the cloud (for example as a web-based service) that supports a flexible DCM application composition paradigm utilizing an underlying application library.

Document US 2015/0081873 discloses a dynamic state-based case management and task transitioning system, comprising a DCM system that maintains a state model and associates states with tasks pertaining to cases, and a method for maintaining and transitioning states for tasks and cases.

Document WO 2017/118597 A1 discloses a computer-implemented method for managing cases using a dynamic case management system, wherein the cases are cast into a model using a graphical modeling language like Case Management Model and Notation (CMMN).

Although case management requires frequent human real-time communication and collaboration in the background, this is not covered by Adaptive Case Management business processors of the state of the art and is not reflected in the corresponding Case Management Model and Notation (CMMN) as governed by the object Management Group (OMG). CMMN typically comprises a modeler applying the notation to specify cases that translates into well-formatted XML documents that can be deployed on a case management runtime system for case execution. The case owner creates a case instance or even may modify a case during the lifetime of the case by using the modeler. Business roles defined for the case are notified by the runtime in order to perform a task as specified in the case via a graphical user interface (cockpit). For specifying or updating a case instance at design-level, the case owner should not have specific implementation skills.

Whereas integration of structured business process aka business workflow (e. g. designed by Business Process Management (BPM) using BPMN version 2.0 notation) is already facilitated at modeling level of CMMN version 1.1. Integration of mainly asynchronous communication like email, fax, chat is only supported at implementation level. This contradicts somehow with the notion of CMMN creating and maintaining cases preferably at modeling level.

Therefore, the present invention is based on the object to overcome the above-described problems. In particular, the present invention is based on the object to provide a method and system to integrate real-time business communication and collaboration tools (like circuit of Unify/ATOS) inherently with case management platforms creating an even more powerful and efficient Business Process Management tool and providing a holistic view already visible at the modeling level of the case, dating the growing need for human collaboration and communication intensive case management processing.

This object is solved according the present invention by an Adaptive Case Management system for modeling a plurality of cases corresponding to at least an agile business process having the features according to claim 1, and a method for extending an Adaptive Case Management system having the features according to claim 8. Preferred embodiments of the invention are specified in the respective dependent claims. Accordingly, an Adaptive Case Management system for modeling a plurality of cases corresponding to at least an agile business process, the system comprises:
- a digital workplace platform;
- a design platform comprising at least one of:
   - an Adaptive Case Management (ACM) modeler,
   - a Business Process Management (BPM) modeler,
   - a Decision Management (DMN) modeler,
- a runtime platform comprising at least one of:
   - a business event handler;
   - an Adaptive Case Management (ACM) runtime system which is connected to an at least one business software application suite via a business software snippet gateway;
   - a Business Process Management (BPM) runtime system which is connected to the at least one business software application suite;
   - a communication and/or collaboration gateway system which is connected to an at least one communication and/or collaboration software; and
   - a Decision Management (DMN) runtime system.

Thereby, this system is configured to model synchronous real-time communication and collaboration acts and genres at design time of each of the plurality of cases and wherein execution and handling of retro-activities of each of the cases is under control of the Adaptive Case Management (ACM) runtime system after a deployment. The technical advantage of this invention is the (synchronous) human communication in particular on discursive discussions with various stakeholders which is apparently much more efficient compared to a synchronous communication only like email or posts. Synchronous communication and collaboration certainly take place without this invention as a non-documented and non-related "shadow"-process of a case instance and with this invention it becomes integral part of a case supporting the aim of case management for business agility and business excellence of a "learning organization".

Further, the current invention complements Adaptive Case Management (ACM) platforms with enterprise real-time communication and collaboration platforms in an integrated fashion allowing the case owner to incorporate communication and collaboration acts and genres already at the case (re-)design time (i. e. CMMN modeling level).

The inventive system allows communication acts and genres to be modeled at design time (CMMN modeling) level as part of a case model and corresponding communication and collaboration session related to communication genres and acts that can be invoked by the ACM runtime system by providing a holistic view of increasing information and knowledge of the case across those platforms. This includes also feedback artifacts created during the collaboration sessions like sessions recordings and (target) transcriptions.

The today covered term collaboration in respect to ACM primarily refers to asynchronous collaboration. This may include asynchronous communication via email, chat or if synchronous is typically limited to invocation. As long as the artifacts created during a synchronous communication session are only created by loosely coupled integration implementation level those artifacts or included information cannot be used for progressing the case at the case modelling level leveraging on the full CMMN capabilities like automated task invocation, meeting sentry conditions for automated decision making. Allowing for communication and collaboration functions and features at design time (i. e. modeling level) and considering created artifacts or information for proceeding of the case as executed by the (e.g. CMMN) runtime is a high technical advantage compared to loosely coupled integration or federation by SOA adapters or alike at implementation level only. In order to integrate real-time communication and collaboration and their created artifacts onto case management platforms, this inventive system proposes to leverage on two major generic options providing for two alternative approaches:
i. Metamodel "extension";
ii. "tablet items" of planning tables associated with "human task".

i.) Almost all metamodels are designated for extensions. For example, the CMMN metamodel according to OMG: CMMN 1.1 allows an element to be generically be extended with extension, "extension definition", "extension attribute definition", and "extension attribute value". This invention proposes to exploit and extend on so-called "human task" towards "human communication task" allowing the modeling and invocation of simple communication acts (one to one calls) as well as more complex and recurring communication practices among team members by using genre analysis in short communication genres, known for human communication research [Business & Information Systems Engineering 2/2009, pg.164-176 - Riemer, Filius: Contextualizing Media Choice Using Genre Analysis (https://link.springer.com/article/10.1007%2Fs12599-008-0015-2)]:
   Genre 1: Discursive Strategy Development;
   Genre 2: Clarification of Technical Details;
   Genre 3: Task Coordination:
      Genre 3a: Information on task distribution;
      Genre 3b: Information on task progress;
   Genre 4: Coordination of Communication;
      Genre 4a: Making an appointment;
      Genre 4b: Clarification availability for communication;
   Genre 5: Socio-emotional Communication.
ii.) Alternatively, such communication acts or communication genres can be modeled via "table items" of "planning tables" associated with a "human task" for which the "table item" can leverage on the case content like "performer ref" rules and their personal assignments.

Advantageously, such genres can be met onto collaboration pattern automatically invoking media components like audio, video, screen sharing, and white-boarding of the shelf and provisioned automatically already during design time of the case. In addition, useful features of the collaboration platform like session recording or transcription can automatically be invoked and resulting artifacts automatically feedback to the case information base. Furthermore, the case item can be crosslinked with the corresponding conversation as of the communication and collaboration platform. This provides for a holistic view on the case including related communication genres and acts regardless on whatever the case observer enters the system via the case management cockpit or the collaboration graphical user interface. The decision on where to model the communication acts or genres in the case management model via for example CMMN depends on the significance of the communication acts/genres for the overall case model and whether conditional features of the case model like manual or automated task invocation by the (e. g. CMMN) runtime system should be applied or pre- and/or post-conditioned as so-called "sentries" shall be decorated with the tasks.

Such "human communication tasks" become integral part of the case leveraging on the case information base business contacts and business roles and their assign contacts. APIs and SDKs offered by the real-time business collaboration tool can be used or involved complementing the aspect of real-time communication and collaboration to a case management platform including (but not limited to) audio/video conferencing, document sharing, whiteboarding, chat, session recordings, and which annotated media for mixed reality or Augmented Interactive Reality user experiences.

As said, real-time communication and collaboration becomes integral part of the case. These can be modeled as new tasks exploiting the extension capabilities of the metamodel (e. g. CMMN metamodel). For example, a communication task can be modeled by the process designer and not only as an implementation option for a human task and executed by the runtime system. Also, the data and artifacts available or generated during the case are present in a synchronous fashion as part of the case as well as part of the real-time communication and collaboration platform. By further refining the new human communication tasks like an inheritance tree (communication acts or more complex communication genres) exploiting further on extension mechanism overtime all features and functions of real-time communication and collaboration platforms become inherent part of the case management platform. This grade of integration at modeling level of the case cannot be achieved by any other approach at implementation level. The integration at design time even allow for specification of sentries (in CMMN pre- and post-conditions) related to communication and collaboration aspects, e. g. conference will be started automatically if presence of the real-time collaboration platform show availability for the next half an hour derived from calendar information of all required participants or subsequent model decision can automatically be taken based on information spotted from a transcript of the real-time collaboration session.

Unless otherwise defined, all terms used in disclosing the invention, including technical and scientific terms, have the meaning as commonly understood by one of ordinary skilled in the art to which this invention belongs. By means of further guidance, term definitions are included to better appreciate the teaching of the present invention.

A "case" is the collection of all information concerning a certain concept, combined with the tasks that can be performed using this information at any moment.

The term "business process" as used herein refers to a specific event in a chain of structured business activities. The event typically changes the state of data and or a product and generates some type of output. Examples of business processes include receiving orders, invoicing shipping products, updating employee information or setting a marketing budget. Business processes occur at all levels of an organization's activities and include events that customers seize and events that are invisible to a customer. The term also refers to the amalgam of all the separate steps toward the final business goal.

A "Digital Workplace Platform" comprises business logic and data for ACM systems, as of this invention an integrated Communication and Collaboration system, optional Business Software Snippets towards BPM systems, and optional DMN systems. Furthermore, it comprises a modeling platform for ACM, BPM, and DMN for modeling and deployment of the models onto the corresponding ACM, BPM, DMN run-time systems. The enhanced ACM as of this invention includes modeling of communication acts and genres to be invoked on a loosely coupled Communication and Collaboration system.

A "Business Event Handler" injects business events (e.g. critical bid) or critical events fired from Artificial/Business Intelligence systems, machine learning (ML) - / artificial intelligence (Al) systems, and/or Internet of Things (loT) platforms for processing on an ACM system.

A "Case Management System" comprises individual case related information, snippets to business workflows (e.g. BPM) for access by the involved business roles and the action plan evolved by the case owner.

A "Competence Library" comprises the knowledge of an organization which can be leveraged by Case Management complemented as of this invention by artifacts delivered by the real-time Communication and Collaboration system.

A "Library of Case Templates" comprises "best practices"-cases, tagged for retrieval and tailored reuse for future cases.

A "Real-time Communication and Collaboration system" provides for audio/video calls and conferences with screen sharing, white-boarding, messaging and notification services, media recording and replay as well as media transcription capabilities.

Circuit is an exemplified Enterprise-grade Real-time Communication and Collaboration system from Atos/Unify. Circuit populates all synchronous and asynchronous communications, actions, and deliverables from its users related to a topic into a corresponding conversation (single pane of glass concept). As of this invention a case relates to at least one corresponding conversation for which their contents are cross-linked.

A communication is typically a communication episode consisting of a sequence of communication acts, each act dealing with an individual topic. If the communication (e.g. episode) has a specific (e.g. business) aim it often follows an implicit structure resulting into a communication genre. The intention of identifying communication genres in a social (team) collaboration applying empiric genre analysis is to improve communication by a best suited genre-media fit and, thus, media selection.

This gains more and more importance as business communication takes more and more place in geographically distributed teams using information and communication infrastructures for virtual meetings. As part of this invention beside basic communication acts, one-to-one or conference calls it is tried to derive from the identified communication genres the most suitable media set audio, audio/video, augmented video (mixed reality), screen sharing, augmented/annotated visuals, and/or white -boarding, and create corresponding "human communication tasks" with automated media delivery made available for orchestration by modelling into the case action plan.

A "snippet" is usually defined as a programming term for a small region of re-usable source code, machine code, or text. Ordinarily, these are formally defined operative units to incorporate into larger programming modules. Snippet management is a feature of some text editors, program source code editors, IDEs, and related software. It allows the user to avoid repetitive typing in the course of routine edit operations. In the sense of this invention a snippet bridges unstructured ACM business processes with structured processes (e.g. BPM business processes and others). In sense of the invention snippets are also workflow process fragments.

A "workflow" is an orchestrated and repeatable pattern of activity, enabled by the systematic organization of resources into processes that transform materials, provide services, or process information. It can be depicted as a sequence of operations, the work of a person or group, the work of an organization of staff, or one or more simple or complex mechanisms.
From a more abstract or higher-level perspective, workflow may be considered a view or representation of real work. The flow being described may refer to a document, service, or product that is being transferred from one step to another.

Workflows may be viewed as one fundamental building block to be combined with other parts of an organization's structure such as information technology, teams, projects and hierarchies. In the sense of the invention a workflow is a predictable sequence of actions or at most a sequence of alternative actions in contrast to a case action plan which allows for agile adaptation to unpredictable events or new information gained during runtime of a case.

A "work package" is a Unit of work or job that is clearly distinguishable from other such work packages, has scheduled start and completion dates with, has a relatively short time span subdivided to facilitate measurement of work performed, has an assigned budget.

A "learning organization" in the sense of the invention is an organization that aims business excellence documenting and leveraging on experiences already gained as "best-practice"-cases including deliverables from the communication and collaboration platform
According to a preferred embodiment, the inventive system comprises a Case Management Model and Notation (CMMN) employed for modeling a case.

According to still another preferred embodiment of the inventive system, the cases are modeled using a case modeler. The case modeler can be a Web-client or an application allowing the modeling of a case thereby using a GUI. The case modeler can create a suited document like XML via an CMMN defined metamodel. This document can be deployed on the respective ACM run-time system.

According to another preferred embodiment of the inventive system, case data of completed cases are stored in a library of case templates.

According to still another preferred embodiment of the inventive system, the at least one communication and/or collaboration software creates case information entities and artifacts for each of the cases and stores the case information entities and artifacts in a competence library.

According to another preferred embodiment of the inventive system, the case information entities and artifacts for each of the cases are crosslinked to one another allowing for seamless access for both, the Adaptive Case Management (ACM) runtime system and/or the communication and/or collaboration system.

Further, according to another embodiment of the inventive system, the at least one communication and/or collaboration software is configured to allow a plurality of users in different locations to communicate and collaborate on a case model in real time with the selection of audio/video conferencing, augmented video (mixed reality), screen sharing, augmented/annotated visuals, and/or white-boarding using a communication network.

Further, according to a present invention, a method for extending an Adaptive Case Management (ACM) system according to a system described above is provided, said method is configured to model synchronous real-time communication and collaboration acts and genres at design time of each of the cases.

According to another preferred embodiment of the inventive method, execution and handling of retro-activities of each of the cases is under control of the Adaptive Case Management (ACM) runtime system after a deployment.

According to still another preferred embodiment of the inventive method, the Case Management Model and Notation (CMMN) of the Object Management Group (OMG) is extended with a modeling element representing synchronous real-time communication and collaboration acts and genres allowing a plurality of users to communicate and collaborate on a case including such acts and genres at design time of a case model.

According to another preferred embodiment of the inventive method, the Adaptive Case Management (ACM) runtime system after deployment of such an extended modeling element provides a business context comprising at least one of a case owner, a business role, an information of the case and further controls an invocation of planned and/or modeled synchronous real-time communication and collaboration acts and genres.

According to still another preferred embodiment of the inventive method, the execution and the handling of retro-activities of each of the cases by the Adaptive Case Management (ACM) runtime system is carried out automatically time-based or manually by a user through an ACM runtime client (cockpit) or automatically when preconditions (CMMN:sentries) are met. A cockpit in this sense is a GUI of an ACM runtime client from a single user's point of view.

According to still another preferred embodiment of the inventive method, the case information entities and artifacts comprise communication logs participation, added/removed participants, session recordings, and/or session transcription which on completion of a session invoke retro-activities for the ACM runtime system by:
- capturing and storing or crosslinking such entities and artifacts as case starter;
- applying post-conditional (CMMN:sentries) influencing the further proceedings of the case;
- triggering a case owner for reviewing such artifacts and revisiting and action planned for the case accordingly if the case owner was not present in a session;
- complementing case roles if *ad hoc* participants are added to a session.

According to still another preferred embodiment of the inventive method, the user has access to the information regardless whether he is accessing the information of the case via the case management cockpit or via the communication and collaboration GUI of the related conversation and can seamlessly navigate between the two systems.

According to still another preferred embodiment of the inventive method, a generic CMMN extension comprising "extension definition", "extension attribute definition", and "extension attribute value" is used to define a human communication task representing communication and collaboration acts and genres;
- is modeled with the Adaptive Case Management (ACM) modeler for each of the cases;
- is deployed on the Adaptive Case Management (ACM) runtime system;
- is invoked by the Adaptive Case Management (ACM) runtime system; and
- is executed on communication and/or collaboration system.
The invention and embodiments thereof will be described below in further detail in connection with the drawings.
FIG. 1 schematically illustrates the methodology of ACM as of the prior art;
FIG. 2 schematically illustrates a high-level architecture for the so-called intelligent network enterprise comprising a digital workplace platform as of this invention;
FIG. 3 schematically illustrates the functional decomposition of a case management system complemented with real-time collaboration; and
FIG. 4 schematically illustrates the enhanced methodology of communication-centered ACM as of this invention.

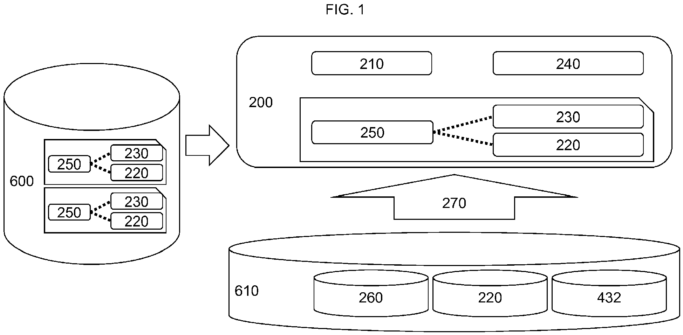

Figure 1 schematically illustrates the methodology of ACM as of the prior art. Each case comprises a workspace 200 e.g. related to an objective (goal) 210, related information 220, optional workflows 230, and created documents 240. The case owner creates an initial action plan 250, identify the required business roles, and assign responsible persons to these roles. The action plan 250 maybe cyclical being revised (new and removed actions) as the knowledge grows in the course of preceding the case. Completed cases can be stored and tagged in a library of case templates 600 so that they can be retrieved for similar cases suited to the needs of the current business events 310. If necessary, related workflow snippets 432 aka business process fragments available on Business Process Management (BPM) systems 430 can be invoked for routine work. The information base may leverage on a growing information and workflow snippets 432 stored in a Competence Library 610.

Obviously, every case has many corresponding human communication and collaboration interactions using horizontal communication and collaboration systems, today, uncoordinated with Case Management platforms. So, if they are used independently form Case Management platforms the information base is fragmented and communication acts 443 and genres 444 cannot be planned, modelled, and invoked as of the action plan of a case without media breaks. On the other hand, projects integrating horizontal communication and collaboration platforms into business processes are time consuming and complex. In contrast to BPM processes for which mainly asynchronous communication suffices, cases evolve agile and requires a lot more of synchronous, i.e. human, communication and collaboration interaction in order not getting stuck or significantly increasing their cycle times.

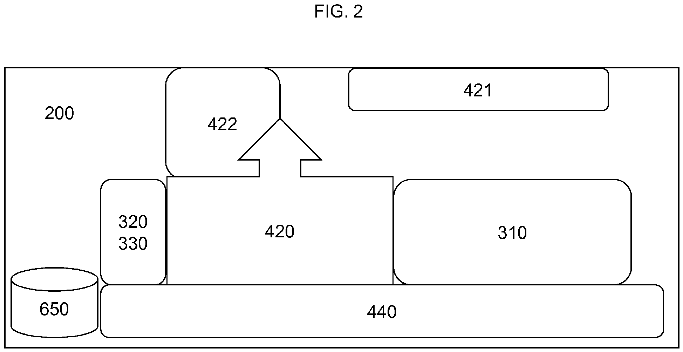

Figure 2 schematically illustrates a high-level architecture for the so-called intelligent network enterprise comprising a digital workplace platform 200 as of this invention. The horizontal communication and collaboration system 440 provides for a growing set of interfaces (APIs, SDKs) corresponding to a growing set of "Human communication tasks" that can be modelled by the case process modelers BPM modeler 330 and ACM modeler 320 e.g. for cases related to vertical business applications suites (VBA) 421. Cases may also be triggered based on event firing of business-related events 310 out of Artificial/Business Intelligence solutions, Machine Learning, Internet-of-Things platforms. ACM runtime systems 420 receiving such events 310 guarantees that the required business process snippets 432 are being involved, required business roles are engaged synchronously or asynchronously (real-time collaboration). The information base and the process know-how grow as the case evolve and the business objective (goal) 210 becoming resolved. Completed cases can be stored and tagged, so that similar cases can retrieve a case and load the current business content. This provides for agility, productivity and efficiency for an increased business excellence and a learning organization. Communication and collaboration systems 440 maybe enhanced, e.g. utilizing the WebRTC data channel, to support Augmented Interactive Reality user experiences as part of the "human communication task" of a case across the entire collaborating team.

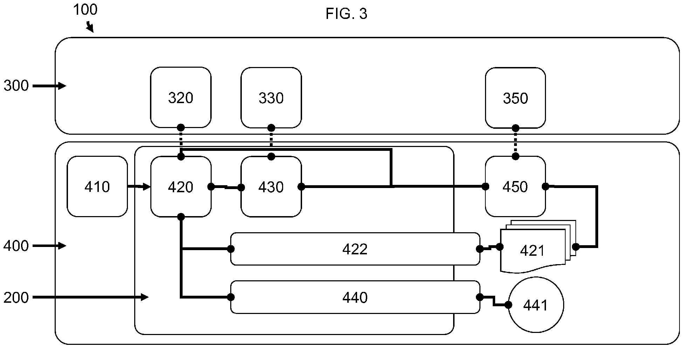

Figure 3 schematically illustrates the functional decomposition of an adaptive case management system 100 complemented with real-time collaboration according to the invention. It is differentiated between design-time utilizing the case modeler 320, 330, 350 and run-time using run-time system 420, 430, 450. At design time the processes are designed by graphical modeling tools. Such models translate the graphs into a textual presentation that can be loaded onto the corresponding run-time systems 420,430, 450 for execution. As a particularity Case Management allows for changing the model during run-time of a case. Business Events 310 are routed to a Case Management if a corresponding case template already exists; otherwise an empty case is created so that the event 310 does not get lost. The ACM run-time 420 interact with the Decision Management 450 if a decision is modelled as part of a case model and with the BPM run-time system 430 if business workflows have to be invoked in order to reflect the case in business software objects. Those business workflows or parts of those aka Business Software Snippets 432, are typically integrated via a corresponding gateway 422. For "human communication tasks" corresponding functions and features of the real-time collaboration can also be invoked. The coordination of a case via the ACM component facilitates that information can be shared between the business software - and the communication and collaboration software platforms providing a holistic view of complementary information of a case context across those platforms. Furthermore, such information can be cross-linked across those platforms for fast and convenient retrieval regardless from which platform the overall system is entered.

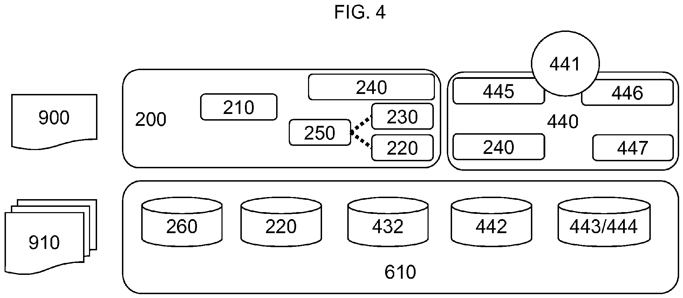

Figure 4 schematically illustrates the enhanced methodology of communication-centered ACM as of this invention. The real-time conversation and their features allow for a much more agile processing of a case and thus typically shorten the overall process cycle time. The competence library 610 assigned to the workspace 200 is complemented with communication or collaboration session artifacts 442, like tagged session recordings and/or transcriptions of corresponding real-time communication and collaboration sessions. Typically the case owner of a case corresponds to the moderator and the business roles correspond to participants in a conversation related to a case. Furthermore, communication acts 443 from simple one-to-one calls up to conference calls or even more complex and media-rich communication genres 444 carried out during the life-time of a case can be captured and stored in the context of a case for retrieval in the course of auditing or best practice sharing when reusing such a case. As created artifacts 700 created by processing the case including communication acts 443 and genres 444 become part of the common information base, they can be linked and retrieved seamlessly from various angels without media breaks: The current case or derived cases, the Business Software 421, and the Conversations of the real-time collaboration platform 440. A Conversation is a set of topics, related posts, communication and collaboration session artifacts 442 including uploaded content or content being created during a communication or collaboration session like (tagged) session recordings or transcriptions. As they become part of the Competence Library 610 after completion of the case, they provide for increased company efficiency and business excellence. Of course, an access control system should be advantageously being applied, e.g. derived from the business role concept as of the Case Management case.

For following example from the insurance sector shall illustrate the invention. Here Case Management is already known to be applied for application management. Regular application management is treated by business workflows executed on the BPM runtime systems 430. If a decision during the workflow execution indicates that the presented insurance application comprises high risks, the BPM workflow branches out to a case processed as part of Case Management. Certain obligatory tasks according to legal or company compliance have to be fulfilled, e.g. requiring consultation of the risk manager by the case owner 900. A collaboration session with the participants known for the case can be created as a "human communication task": one-to-one conversation with screen sharing. The application form and the risk assessment document can be automatically provided to the conversation beforehand. When to conversation has been carried out, the oral (voice recording) or written (post or transcription of the talk) advice from the risk manager is registered and become content of the conversation and of the case. In case of a negative advice the case owner 900 may escalate the case, i.e. modelled as another optional "human communication task", to an involved mediator for which a final virtual decision meeting is planned by the case owner 900. Adding the mediator role to the case, allows the mediator to inform himself/herself to review the case materials and the recorded or transcribed arguments of the risk manager to be prepared for the virtual meeting. The mediation session will be also recorded and tagged, e.g. with name of the applicant and major risk. When the case is completed, the case artifacts 700 are stored tagged in the Competence Library 610 and linked to the corresponding Business Objects 210 created by invoked BPM workflow or snippets. If the case is subject to auditing, e.g. in case of a claim from the client, the artifacts 700 can easily be retrieved by inspecting the Business Object 210, e.g. of the related Customer Relation Object or by searching the conversation history. If there is a new case with a similar risk, the case can be searched in the Library of Case Templates 600 and reused. A reference in the library 600 to the completed case allows the new case owner 900 to understand the previous case and decision rational aiding to accelerate the current case, e.g. taking the decision as a precedent.

### Reference numerals

- 100: Adaptive Case Management (ACM) system
- 101: Plurality of cases
- 200: Digital workplace platform
- 210: Objective
- 220: Information
- 230: Workflows
- 240: Documents
- 250: Action Plan
- 260: Work Packages
- 270: Case instantiation
- 300: Design platform
- 310: Business-related event
- 320: Adaptive Case Management (ACM) modeler
- 340: Business Process Management (BPM) modeler
- 350: Decision Management (DMN) modeler
- 400: Runtime platform
- 410: Business event handler
- 420: Adaptive Case Management (ACM) runtime system
- 421: Business software application suite
- 422: Business software snippet gateway
- 430: Business Process Management (BPM) runtime system
- 432: Snippets
- 440: Communication and/or collaboration system
- 441: Communication and/or collaboration software
- 442: Communication and/or collaboration session artifacts
- 443: Acts
- 444: Genres
- 445: Real-time communication and/or collaboration
- 446: Asynchronous communication and/or collaboration
- 447: Groupware integration
- 450: Decision Management (DMN) runtime system
- 600: Library of case templates
- 610: Competence library
- 650: Learning organization
- 700: Case information entities and artifacts
- 800: Modeling element
- 900: Case owner
- 910: Business roles

## Claims

1. An adaptive case management (ACM) system (100) for modeling a plurality of cases (101) corresponding to at least an agile business process, whereby said system (100) comprises:
a digital workplace platform (200);
a design platform (300), comprising:
an adaptive case management (ACM) modeler (320),
a runtime platform (400), comprising at least one of:
a business event handler (410);
an adaptive case management (ACM) runtime system (420), which is connected to an at least one business software application suite (421) via a business software snippet gateway (422);
a communication and/or collaboration system (440), which is connected to an at least one communication and/or collaboration software (441);
**characterized in that**, said system (100) is configured to model synchronous real-time communication and collaboration acts (443) and genres (444) at design time of each of the plurality of cases (101); and wherein execution and handling of retro-activities of each of the cases (101) is under control of the adaptive case management (ACM) runtime system (420) after a deployment.

2. The system (100) of claim 1, wherein said design platform (300) comprises a business process management (BPM) modeler (340) and/or a decision management (DMN) modeler (350); and
wherein said runtime platform (400) comprises a business process management (BPM) runtime system (430), which is connected to the at least one business software application suite (421) and/or a decision management (DMN) runtime system (450).

3. The system (100) of claims 1-2, wherein said cases (101) are modeled using a case modeler client and/or wherein said system (100) comprises a Case Management Model and Notation (CMMN) employed for modeling a case model.

4. The system (100) of claims 1-3, wherein case data of said cases (101) are stored in a repository (600) or in a library of case templates (601).

5. The system (100) of claims 1-4, wherein the at least one communication and/or collaboration software (441) creates case information entities and artifacts (700) for each of the cases (101), and stores the case information entities and artifacts (700) in a competence library (610).

6. The system (100) of claim 5, **characterized in that**, the case information entities and artifacts (700) for each of the cases (101) are cross-linked to one another allowing for seamless access from both the adaptive case management (ACM) runtime system (420) and/or the communication and/or collaboration system (440).

7. The system (100) of one of the proceeding claims wherein the at least one communication and/or collaboration software (441) is configured to allow a plurality of users in different locations to communicate and collaborate on a case model, in real-time with a selection of audio/video conferencing, augmented video (mixed reality), screen sharing screen sharing, augmented/annotated visuals, and/or white-boarding using a communication network.

8. A method for extending an adaptive case management (ACM) system (100) according to one of the claims 1-7 wherein said method is configured to model synchronous real-time communication and collaboration acts (443) and genres (444) at design time of each of the cases (101).

9. The method of claim 8, wherein execution and handling of retro-activities of each of the cases (101) is under control of the adaptive case management (ACM) runtime system (420) after a deployment.

10. The method of one of the claims 8 -9, wherein the Case Management Model and Notation (CMMN) of the Object Management Group (OMG), is extended with at least one modeling element (800) representing synchronous real-time communication and collaboration acts (443) and genres (444) allowing a plurality of users to communicate and collaborate on a case including such acts (443) and genres (444) defined at design-time of a case model.

11. The method of claim 10, wherein the adaptive case management (ACM) runtime system (420) after deployment of such an extended modeling element (800) provides a business context comprising at least one of a case-owner (900), a business role (910), and information of the case (220); and further controls an invocation of planned and/or modelled synchronous real-time communication and collaboration acts (443) and genres (444).

12. The method of claim 9, wherein the execution and the handling of retro-activities of each of the cases (101) by the adaptive case management (ACM) runtime system (420) is carried out automatically time-based or manually by a user through a ACM run-time client (cockpit) or automatically when preconditions (CMMN: Sentries) are met.

13. The method of claim 8, wherein the case information entities and artifacts (700) comprise communication logs, participation, added/removed participants, session recordings, and/or session transcriptions, which on completions of a session invoke retro-activities for the ACM run-time system (420) by:
- capturing and storing or cross-linking such entities and artifacts (700) as case data;
- applying post-conditions (CMMN: Sentries) influencing the further proceedings of the case;
- triggering a case owner (900) for reviewing such artifacts (700) and revisiting an action plan of the case accordingly if the case owner (900) was not present in a session;
- complementing case roles if ad-hoc participants are added to a session.

14. The method of claim 8, wherein the user has access to the information regardless whether s/he is accessing the information of a case via the Case Management cockpit or via the communication and collaboration GUI of the related conversation and can seamlessly navigate between the two systems (410, 440).

15. The method of claim 8, wherein a generic CMMN Extension comprising "ExtensionDefinition", "ExtensionAttributeDefinition", and "ExtensionAttributeValue" is used to define at least one human communication task representing a communication and collaboration act (443) and/or genre (444);
- is modeled with the adaptive case management (ACM) modeler (320) for each of the cases (101);
- is deployed on the adaptive case management (ACM) runtime system (420);
- is invoked by the adaptive case management (ACM) runtime system (420); and
- is executed via the communication and/or collaboration gateway system (440).
